# EUROPÄISCHE PATENTSCHRIFT

(11) **EP 2 193 909 B1**
(45) Veröffentlichungstag und Bekanntmachung des Hinweises auf die Patenterteilung: **04.07.2012**
(21) Anmeldenummer: 09176982.8
(22) Anmeldetag: 25.11.2009
(51) Int. Cl.: B29C 65/44, F28F 9/00, B29C 65/02, B29C 65/46

(54) **Ölkühler in einem Kraftfahrzeug und Verfahren zur Herstellung einer Verbindungsanordnung mit einem solchen Ölkühler**
Automotive oil cooler and method of manufacturing a bonding arrangement including such an oil cooler
Refroidisseur d'huile pour automobile et procédé de fabrication d'un assemblage de liaison comprenant un tel refroidisseur d'huile

(30) Priorität: 02.12.2008 DE 102008060153
(43) Veröffentlichungstag der Anmeldung: 09.06.2010
(73) Patentinhaber: Mahle International GmbH, 70376 Stuttgart (DE)
(72) Erfinder: Grüner, Andreas, 73110 Hattenhofen (DE); Klöpfer, Martin, 71364 Winnenden (DE); Knauß, Rüdiger, 71349 Kernen i.R. (DE); Sendor, Robert, 82515 Wolfratshausen (DE)
(74) Vertreter: Jooß, Martin

(56) Entgegenhaltungen:
- DE-C2- 1 303 323
- JP-A- 58 168 679
- JP-A- 62 127 226
- US-A- 5 844 999

## Beschreibung

Die vorliegende Erfindung betrifft einen Ölkühler in einem Kraftfahrzeug. Die Erfindung betrifft außerdem ein Verfahren zur Herstellung einer Verbindungsanordnung mit einem derartigen Ölkühler und einem Trägerelement aus Kunststoff.

Funktionseinrichtungen in Kraftfahrzeugen, wie beispielsweise Ölkühler, werden üblicherweise über Schraubverbindungen an einer Karosserie bzw. einem entsprechenden Rahmenelement des Kraftfahrzeuges befestigt. Derartige Schraubverbindungen weisen jedoch eine hohe Teilvielfalt sowie einen nicht zu unterschätzenden Montageaufwand zum Herstellen auf. Werden darüber hinaus beim Anziehen der Schraubverbindung unterschiedliche Drehmomente aufgebracht, so kann durch diese die Verbindung zwischen der Funktionseinrichtung und dem Kraftfahrzeug negativ beeinflusst werden. Vor allem erzeugen jedoch die mit derartigen Schraubverbindungen einhergehende Teilevielfalt und die damit verbundenen Lager- und Logistikkosten sowie der Montageaufwand zur Herstellung der Schraubverbindungen nicht unerhebliche Kosten.

Die vorliegende Erfindung beschäftigt sich mit dem Problem, einen Ölkühler zu schaffen, welcher sich besonders einfach und mit hoher Reproduktionsqualität an einem weiteren Bauteil aus Kunststoff befestigen lässt.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, bei einem Ölkühler eines Kraftfahrzeuges, welcher üblicherweise eine den Ölkühler tragende Grundplatte aufweist, an dieser Grundplatte abstehende und leicht zu erhitzende Teilbereiche vorzusehen, wobei diese Teilbereiche mit einer heiß in einer Trägerplatte aus Kunststoff einbettbaren Ankergeometrie versehen sind. Die abstehenden Teilbereiche sind dabei vorzugsweise ebenso wie die gesamte Grundplatte aus Metall ausgebildet und können so mittels speziell angepasster Induktionsheizungen leicht erwärmt bzw. erhitzt werden. In erhitztem Zustand sind die als Ankergeometrien ausgebildeten Teilbereiche in der Lage, in ein aus Kunststoff ausgebildetes Trägerelement einzudringen und sich dort nach dem Abkühlen fest zu verankern. Die abstehenden Teilbereiche können dabei beispielsweise durch ein einfaches Abbiegen von entsprechend ausgestanzten Teilabschnitten der Grundplatte hergestellt werden, wobei die dann abgebogenen Teilbereiche mittels einer schablonenartig ausgebildeten Induktionsheizung einfach zu erhitzen sind. Im Unterschied zu einer Schraubverbindung, bei welcher der Ölkuhler üblicherweise entsprechende Durchgangsöffnungen an der Grundplatte aufweist, bietet der erfindungsgemäße Ölkühler den großen Vorteil, dass diese nach dem Erhitzen der abstehenden Teilbereiche direkt in das aus Kunststoff ausgebildete Trägerelement eingedrückt und so kraftschlüssig mit diesem verbunden werden kann. Eine Montage von Schraubverbindungen, verbunden mit den hieraus resultierenden hohen Lager- und Logistikkosten für die Schrauben und Muttern sowie die hohen Kosten für den aufzubringenden Montageaufwand, können dabei entfallen, wodurch die Befestigung des erfindungsgemäßen Ölkühlers deutlich einfacher und kostengünstiger gestaltet werden kann. Zugleich ermöglicht ein derartig ausgebildeter Ölkuhler ein äußerst prozesssicheres Verbinden bzw. Befestigen des selben an einem Trägerelement aus Kunststoff, wodurch eine äußerst genaue produzierbare Verbindung geschaffen werden kann, was für die Qualitätssicherung von entscheidendem Vorteil ist.

Zweckmäßig weist zumindest ein Teilbereich der Ankergeometrie eine Rändelung auf. Eine derartige Rändelung, beispielsweise in der Art eines Fischgrätmusters, erzeugt beim Eindrücken des erhitzten Teilbereiches in das Trägerelement aus Kunststoff eine Verzahnung des erhitzten Teilbereiches mit dem Trägerelement und dadurch eine besonders zuverlässige, da feste Verbindung zwischen dem Ölkühler und dem Trägerelement. Die Rändelung kann dabei allgemein Furchen, Nuten und/oder Gravuren umfassen, welche einerseits einfach und kostengünstig herzustellen sind und andererseits einen hohen Widerstand gegen ein Herausziehen der Teilbereiche aus dem Trägerelement bieten.

Bei einer weiteren vorteilhaften Ausführungsform der erfindungsgemäßen Lösung sind an der Grundplatte des Ölkühlers randseitige und optional zusätzlich mittige als Ankergeometrie ausgebildete Teilbereiche vorgesehen, die insbesondere zusammen mit der Grundplatte in einem einzigen Stanz-/Biegearbeitsschritt hergestellt werden. Die für die Befestigung erforderlichen Teilbereiche benötigen somit keinen separaten Arbeitsschritt, sondern können zusammen mit der Grundplatte hergestellt werden. Dies kann beispielsweise in einem kombinierten Stanz- und Biegewerkzeug erfolgen, welches zunächst die Grundplatte ausstanzt und anschließend fertig umformt. Hierdurch ist eine besonders rationelle und dadurch kostengünstige Herstellung der erfindungsgemäßen Grundplatte des Ölkuhlers möglich.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: ein erfindungsgemäßer Ölkühler mit ei- ner Detaildarstellung eines abstehenden Teilberei- ches einer Grundplatte,
- Fig. 2: eine Darstellung wie in Fig. 1, jedoch bei einer Ansicht von schräg unten,
- Fig. 3: eine Darstellung wie in Fig. 1, jedoch mit anders ausgebildeten abstehenden Teilbereichen,
- Fig. 4: eine Darstellung wie in Fig. 3, jedoch bei einer Ansicht von schräg unten.

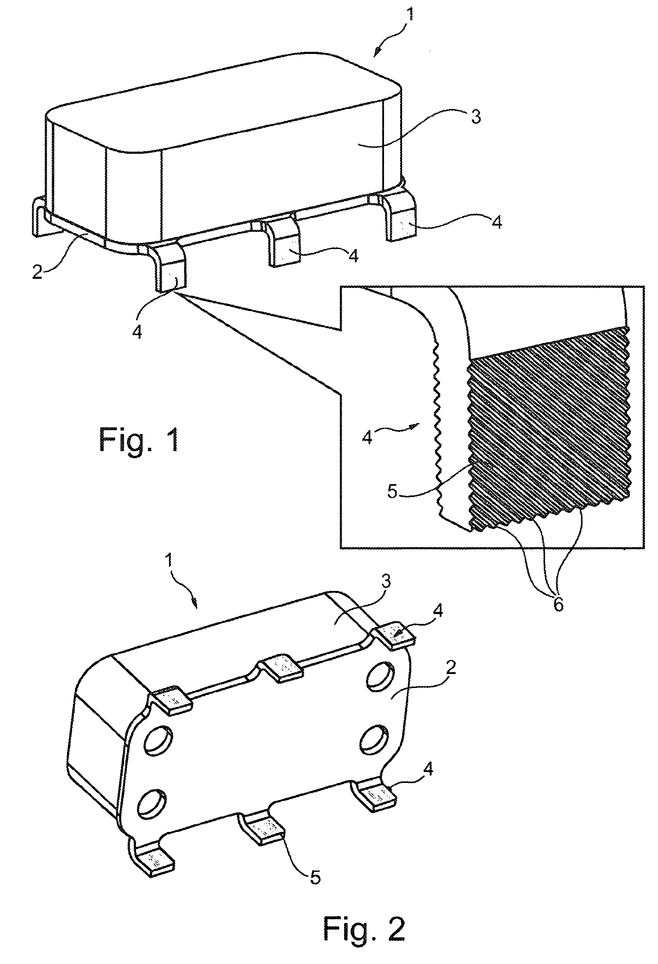

Entsprechend der Fig. 1 weist ein Ölkühler 1 eine Grundplatte 2 auf, auf welcher ein Funktionselement 3 der Funktionseinrichtung 1 befestigt ist. An der Grundplatte 2 ist erfindungsgemäß zumindest ein abstehender Teilbereich 4, gemäß den Figuren 1 und 2 insgesamt sechs abstehende Teilbereiche 4, vorgesehen, welche als erhitzbare und zur Befestigung heiß in eine nicht gezeigte Trägerplatte aus Kunststoff einbettbare Ankergeometrien ausgebildet sind. Die abstehenden Teilbereiche sind dabei gemäß den Darstellungen in Fig. 1 und 2 als abgewinkelte Füße ausgebildet, auf welchen der Ölkühler kein Komma sicher stehen können.

Wie die Detaildarstellung des abstehenden Teilbereichs 4 in Fig. 1 zeigt, ist der Teilbereich der Ankergeometrie mit einer Rändelung 5 versehen. Die Rändelung 5 besteht dabei in gezeigtem Ausführungsbeispiel aus parallel zueinander angeordneten Furchen 6, wobei jedoch auch andere Muster, beispielsweise ein Fischgrätmuster, unter dem Begriff der Rändelung verstanden werden soll. Insbesondere ist hierbei an ein einfaches, ein gegenläufiges Rändel oder an ein Kreuzrändel zu denken.

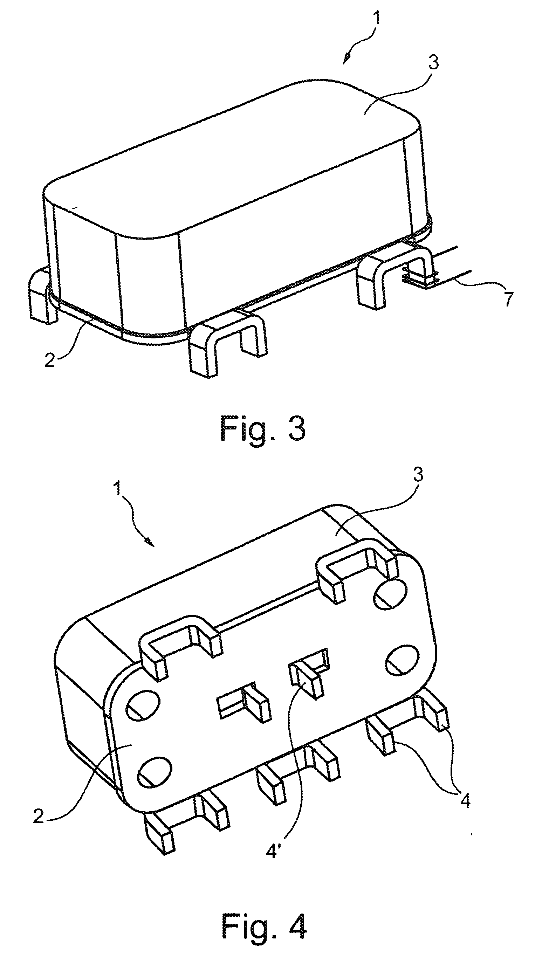

Zur Befestigung des erfindungsgemäßen Ölkühlers 1 an dem nicht gezeigten Trägerelement aus Kunststoff werden nunmehr die einzelnen Teilbereiche 4 des Ölkühlers 1 so stark erhitzt, dass sich diese bei einem Andrücken des Ölkühlers 1 an das Trägerelement aus Kunststoff in dieses einbetten. Eine Erhitzung der abstehenden Teilbereiche 4 kann dabei beispielsweise mittels einer Induktionsheizung 7 erfolgen (vgl. Fig. 3). Eine derartige Induktionsheizung 7 dient der Erwärmung des metallischen Teilbereichs 4 mittels magnetischer Induktion. Durch eine Spule der Induktionsheizung 7, welche mit Wechselstrom beaufschlagt wird, wird dabei ein wechselndes Magnetfeld erzeugt, das in einem elektrisch leitenden Körper, hier dem Teilbereich 4, einen Wirbelstrom induziert. Dieser im Teilbereich induzierte Strom verursacht wegen des elektrischen Widerstandes eine Erwärmung des Teilbereiches 4 an den Stellen des Stromflusses. Hierdurch ist eine gezielte Erwärmung der Teilbereiche möglich, wobei die eingeleitete Wärme sofort und unmittelbare im Teilbereich 4 selbst, das heißt in dessen Innerem, entsteht und da nicht erst durch Wärmeleitung dorthin geleitet werden muss. Selbstverständlich sind aber auch andere Erwärmungsprozesse, wie beispielsweise einem kompletten Erhitzen der Grundplatte 2 in einem Ofen, ein Erhitzen der Teilbereiche 4 in einem Fluidbad, mittels Heißluft, mittels Ultraschall, mittels Wärmestrahlung und/oder mittels einer Flamme denkbar. Im Vergleich zu letztgenannt Erwärmungsverfahren, bietet eine Erhitzung der Teilbereiche 4, mittels einer Induktionsheizung den großen Vorteil, dass diese exakt steuerbar ist und bessere Arbeitsbedingungen schafft, insbesondere im Hinblick auf eine Reduzierung von Schmutz und Rauch.

Generell können dabei die abstehenden Teilbereiche 4 der Grundplatte 2 unterschiedliche Ausführungsformen aufweisen, wobei hier lediglich zwei verschiedene gezeigt sind. Insbesondere ist dabei denkbar, dass die Teilbereiche 4 und die Grundplatte 2 aus einem Stück hergestellt sind oder aber dass die Teilbereiche 4 separat zur Grundplatte 2 hergestellt und in einem weiteren Arbeitsschritt mit dieser verbunden werden. Hierunter würde insbesondere ein sogenanntes "gebautes System" mit beispielsweise angenieteten "Inserts" fallen. Denkbar ist auch, dass Stutzen und/oder Näpfe mit einem entsprechenden Ankerprofil an die Grundplatte 2 angelötet werden.

Neben den gemäß den Fig. 1 bis 4 randseitig an der Grundplatte 2 angeordneten Teilbereiche 4, können zusätzlich auch mittige und als Ankergeometrie ausgebildete Teilbereiche 4' vorgesehen sein (vgl. Fig. 4). Sämtlichen Teilbereichen 4, 4' ist dabei jedoch vorteilhafterweise gemein, dass sie zusammen mit der Grundplatte 2 in einem einzigen Stanz- und Biegearbeitsschritt hergestellt werden können. Dabei erfolgt zunächst ein Ausstanzen der an sich ebenen Grundplatte 2 und sich unmittelbar daran anschließend ein Umformen, d.h. abbiegen der abstehenden Teilbereiche 4, 4'.

Selbstverständlich ist der Werkstoff für die Trägerplatte nicht nur auf Kunststoff beschränkt, sondern umfasst sämtliche Werkstoffe, in welche die erhitzten Teilbereiche 4, 4' der Funktionseinrichtung 1 zur Herstellung einer festen Verbindung unter Materialverdrängung eingedrückt bzw. eingebettet werden können. Im Unterschied zu einer bisherigen, mittels Schrauben, erzeugten Verbindung zwischen dem Ölkühler 1 und dem Trägerelement, lässt sich mit dem erfindungsgemäßen Ölkühler 1 eine äußerst einfache und kostengünstige Verbindung schaffen, die zu dem eine hohe Prozesssicherheit sowie eine hohe reproduzierbare Qualität aufweist. Da die bisher erforderlichen Schrauben vorzugsweise gänzlich entfallen, können darüber hinaus die Teilevielfalt und damit verbunden die Lager- und Logistikkosten reduziert werden, so dass auch eine im Vergleich zum Stand der Technik kostengünstige Verbindungsanordnung geschaffen werden kann.

Zusammenfassend lässt sich somit feststellen, dass der erfindnungsgemäße Ölkühler 1 abstehende und erhitzbare Teilbereiche 4 aufweist, welche vorzugsweise mit einer Rändelung 5 versehen sind, und über welche der Ölkühler 1 einfach und prozesssicher mit einem weiteren Bauteil, beispielsweise einem Trägerelement aus Kunststoff, verbunden werden kann. Hierbei ist insbesondere auch an eine vollautomatisierte Herstellung der Verbindung zwischen dem Ölkühler 1 und dem Trägerelement zu denken.

## Patentansprüche

1. Ölkühler (1) in einem Kraftfahrzeug mit einer metallischen Grundplatte (2), an der wenigstens ein abstehender Teilbereich (4,4') als metallische Ankergeometrie ausgebildet ist, die in erhitztem Zustand in der Lage ist, in ein aus Kunststoff ausgebildetes Trägerelement einzudringen und sich dort nach dem Abkühlen fest zu verankern, wobei an der Grundplatte (2) randseitige und zusätzlich mittige als Ankergeometrie ausgebildete Teilbereiche (4,4') vorgesehen sind, welche zusammen mit der Grundplatte (2) in einem gemeinsamen Stanz-/Biegearbeitsschritt hergestellt sind.

2. Ölkühler nach Anspruch 1,
**dadurch gekennzeichnet,**
**dass** zumindest ein Teilbereich (4,4') der Ankergeometrie eine Rändelung aufweist.

3. Ölkühler nach Anspruch 1 oder 2,
**dadurch gekennzeichnet,**
**dass** zumindest drei von der Grundplatte (2) abstehende Teilbereiche (4,4') vorgesehen sind, die als Füße der Grundplatte (2) ausgebildet sind.

4. Verfahren zur Herstellung einer Verbindungsanordnung, bei dem
- der zumindest eine als Ankergeometrie ausgebildete Teilbereich (4,4') einer Grundplatte (2) eines Ölkühlers (1) erhitzt wird,
- die der wenigstens eine erhitzte Teilbereich (4,4') der Grundplatte (2) in ein Trägerelement aus Kunststoff eingedrückt wird,
- der wenigstens eine Teilbereich (4,4') erkaltet und sich dadurch eine feste, unlösbare Verbindung zwischen dem Trägerelement und der Grundplatte (2) bzw. dem Ölkühler (1) ergibt,
- der wenigstens eine Teilbereich (4,4') der Grundplatte (2) induktiv erhitzt wird.

## Claims

1. An oil cooler (1) in a motor vehicle, said oil cooler comprising a metallic base plate (2) on which at least one protruding segment (4, 4') is formed as a metallic anchor geometry which is able in the heated state to penetrate into a carrier element made of plastic and to firmly anchor itself therein after cooling, wherein peripheral and in addition central segments (4, 4') formed as an anchor geometry are provided on the base plate (2), which segments are fabricated together with the base plate (2) in a common punching/bending step.

2. The oil cooler according to claim 1,
**characterized in**
**that** at least one segment (4, 4') of the anchor geometry has a knurl.

3. The oil cooler according to claim 1 or claim 2,
**characterized in**
**that** at least three segments (4, 4') are provided which protrude from the base plate (2) and which are formed as legs of the base plate (2).

4. A method for producing a connecting arrangement, wherein
- the at least one segment (4, 4') of a base plate (2) of an oil cooler (1), which segment is formed as an anchor geometry, is heated,
- the at least one heated segment (4, 4') of the base plate (2) is pressed into a carrier element,
- the at least one segment (4, 4') cools down resulting in a fixed non-detachable connection between the carrier element and the base plate (2) or the oil cooler (1),
- the at least one segment (4, 4') of the base plate (2) is heated inductively.

## Revendications

1. Refroidisseur d'huile (1) dans un véhicule automobile comportant une plaque de base métallique (2), sur laquelle au moins une zone partielle en saillie (4, 4')est réalisée comme une géométrie d'ancrage métallique, qui en l'état chauffé est en mesure de pénétrer dans un élément porteur réalisé en plastique et de s'y ancrer solidement après le refroidissement, dans lequel sur la plaque de base (2) des zones partielles (4, 4') réalisées du côté des bords et en outre au milieu comme une géométrie d'ancrage sont prévues, lesquelles sont fabriquées conjointement à la plaque de base (2) lors d'une étape de travail de cintrage/ découpage à la presse commune.

2. Refroidisseur d'huile selon la revendication 1, **caractérisé en ce que** au moins une zone partielle (4, 4') de la géométrie d'ancrage présente un moletage.

3. Refroidisseur d'huile selon la revendication 1 ou 2, **caractérisé en ce que** au moins trois des zones partielles (4, 4') en saillie depuis la plaque de base (2) sont prévues, lesquelles sont réalisées comme les pieds de la plaque de base (2).

4. Procédé de fabrication d'un dispositif de liaison, dans lequel :
- au moins une zone partielle (4, 4') réalisée comme une géométrie d'ancrage d'une plaque de base (2) d'un refroidisseur d'huile (1) est chauffée,
- au moins une zone partielle chauffée (4, 4') de la plaque de base (2) est enfoncée dans un élément porteur en plastique,
- au moins une zone partielle (4, 4') refroidie et il se forme ainsi une liaison solide, indissoluble entre l'élément porteur et la plaque de base (2), respectivement le refroidisseur d'huile (1),
- au moins une zone partielle (4, 4') de la plaque de base (2) est chauffée par induction.
